# EUROPÄISCHE PATENTSCHRIFT

(11) **EP 0 628 756 B1**
(45) Veröffentlichungstag und Bekanntmachung des Hinweises auf die Patenterteilung: **03.09.1997**
(21) Anmeldenummer: 94107145.8
(22) Anmeldetag: 06.05.1994
(51) Int. Cl.: F16J 15/34

(54) **Gleitringdichtung**
Mechanical seal
Garniture mécanique d'étanchéité

(30) Priorität: 11.06.1993 DE 9308748 U
(43) Veröffentlichungstag der Anmeldung: 14.12.1994
(73) Patentinhaber: LATTY INTERNATIONAL S.A., F-91400 Orsay (FR)
(72) Erfinder: Latty, Cyril Xavier, Dr., F-92210 Saint Cloud (FR)
(74) Vertreter: Eder, Thomas, Dr.-Ing.

(56) Entgegenhaltungen:
- DE-A- 4 130 767
- GB-A- 2 260 376
- US-A- 3 936 926
- US-A- 4 639 000

## Beschreibung

Die Erfindung bezieht sich auf eine Gleitringdichtung für eine rotierende Welle nach dem Oberbegriff des Ansprüchs 1.

Gleitringdichtungen finden in der modernen Verfahrenstechnik vielseitige Anwendungen. Als Beispiel sind genannt Prozeßpumpen in Raffinerien und Chemieanlagen, die Ausrüstung von Kesselspeise-Wasserpumpen in Kraftwerken sowie die Abdichtung schnelllaufender Turboverdichter. Weitere Anwendungsbeispiele sind der Apparatebau, wie die Rührwerke und Horizontalmischer.

Im allgemeinen sind derartige Gleitringdichtungen Flüssigkeitsdichtungen. Sollen Gase abgedichtet werden, muß eine zusätzliche Flüssigkeit als Fremdflüssigkeit eingesetzt werden.

Anforderungen für die Funktionsfähigkeit sind eine stationäre Gleitfläche, welche mit einer anderen Gleitfläche zusammenwirkt, die rotierend mit einer Welle verbunden ist. Beide Gleitflächen sind planparallel, rechtwinklig zur Welle angeordnet und federelastisch im Kontakt.

Als Stand der Technik ist es bereits bekannt, den rotierenden Gleitring mit einer Hülse zu verbinden, wobei insbesondere über den Umfang verteilte Stifte Anwendung finden (US-A-4 639 000). Nachteilig ist hierbei der hohe Montageaufwand, der geringe vorhandene Platzbedarf sowie eine negative Beeinflussung der Dichtwirkung.

Weiterer Stand der Tecknik ist eine Gleitringdichtung mit drei erhöhten und drei dünneren Abschnitten des Gleitrings, welche damit über seinen Umfang gewellt ausgebildet ist (DE-4 130 767 A1). Durch diese besondere Gestaltung sollen Umfangszugspannungen aufgehoben werden.

Der vorliegenden Erfindung liegt demgegenüber die Aufgabe zugrunde, eine Gleitringdichtung der eingangs genannten Art zu schaffen, welche eine Verbesserung der Verbindung zwischen dem rotierenden Gleitring und der Hülse bei geringem Kosten- und Montageaufwand und unter Beibehaltung der gewünschten Dichtigkeit gewährleistet.

Diese Aufgabe wird erfindungsgemäß durch die Merkmale des Anspruchs 1 gelöst. Durch diese unmittelbare Verbindung zwischen Hülse und Gleitring entfallen der hohe Montageaufwand; es ist nur ein geringer Raumbedarf erforderlich und die Dichtigkeit wird nicht beeinflußt.

Durch die spezielle Anwendung eines sphärischen Dreiecks ergibt sich eine gute Verbindung zwischen Hülse und Gleitring.

Das sphärische Dreieck liegt im axialen Abstand von einem Abschlußflansch der Hülse im Bereich der Dichtflächen des Gleitrings und des Dichtrings. Weiterhin kann sich die Hülse durch das gesamte Gehäuse erstrecken und auf der dem Abschlußflansch abgekehrten Seite mit einem Haltering verbunden sein.

In weiterer Ausgestaltung der Erfindung kann die Verbindung zwischen der Hülse und dem Haltering über mindestens eine Eingriffsschraube erfolgen, welche stirnseitig den Außenumfang der Welle beaufschlagt. Hierbei kann der Haltering axial durch einen in der Hülse eingelagerten Federring und durch mehrere, an dem Gehäuse befestigte Halteteile gesichert sein.

Die Erfindung wird nachfolgend anhand eines in der Zeichnung dargestellten Ausführungsbeispieles näher beschrieben.

In der Zeichnung zeigen:
- Fig. 1: eine Seitenansicht der erfindungsgemäßen Gleitringdichtung im Schnitt gemäß der Linie I-I in Fig. 2,
- Fig. 2: eine Vorderansicht der Gleitringdichtung,
- Fig. 3: eine Ansicht des sphärischen Dreiecks der Hülse 6.

Die in den Figuren dargestellte Gleitringdichtung besteht im wesentlichen aus einem Gehäuse 21 mit einem darin angeordnetem, stationären Dichtring 2. Dieser Dichtring 2 wird von einer Feder 7 beaufschlagt. Die stirnseitige Dichtfläche dieses Dichtrings 2 berührt die stirnseitige Dichtfläche eines rotierenden Gleitrings 1, welcher auf einer Hülse 6 befestigt ist. Diese Hülse 6 ist mit einer rotierenden Welle 20 verbunden.

Die Hülse 6 erstreckt sich durch das gesamte Gehäuse 21 und weist einen Abschlußflansch 36 auf. Auf der dem Abschlußflansch 36 abgekehrten Seite ist die Hülse 6 mit einem Haltering 10 verbunden.

Die Verbindung zwischen der Hülse 6 und dem Haltering 10 erfolgt über mindestens eine Eingriffsschraube 12, welche stirnseitig den Außenumfang der Welle 20 beaufschlagt. Darüberhinaus ist der Haltering 10 axial durch einen in der Hülse 6 eingelagerten Federring 11 und durch mehrere, an dem Gehäuse 21 befestigte Halteteile 13 gesichert.

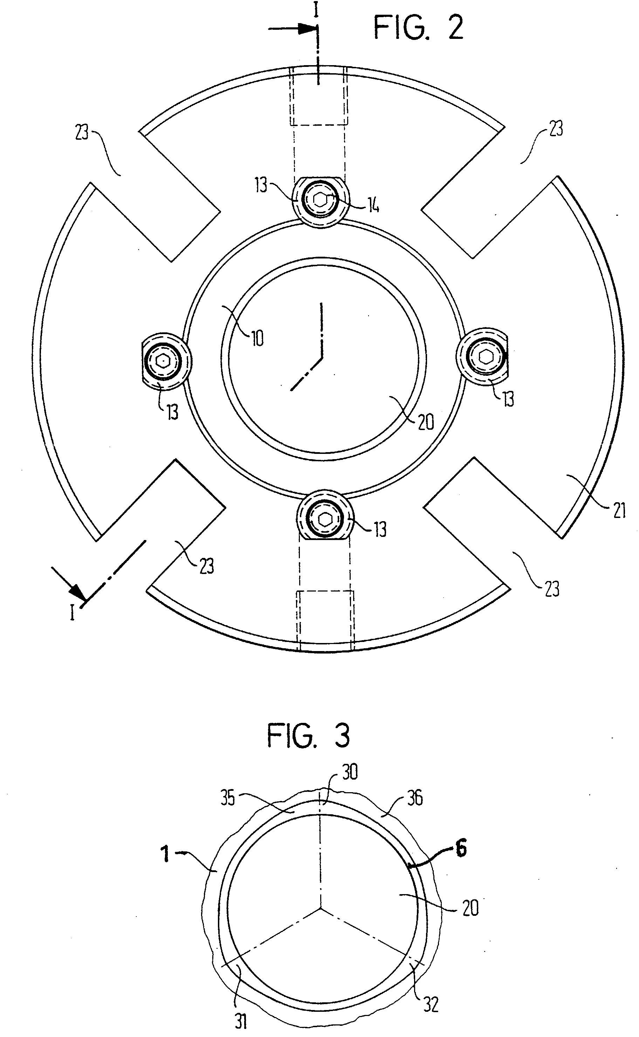

Gemäß Fig. 2 finden insgesamt vier Halteteile 13 Anwendung, welche über Schrauben 14 mit dem Gehäuse 21 verbunden sind. Diese Halteteile 21 übergreifen den Außenumfang des Halterings 10 und sichern ihn damit in der in Fig. 2 dargestellten Position.

Das Gehäuse 21 weist gemäß Fig. 2 über den Umfang verteilt mehrere Langlöcher 23 auf. In diese Langlöcher 23 greifen gemäß Fig. mehrere Schrauben 24 ein, welche mit einem entsprechenden Maschinenteil 22 verschraubt sind. Auf der dem Maschinenteil 22 zugewandten Seite befindet sich ein nicht näher dargestelltes Maschinenelement, welches abzudichtende Flüssigkeit enthält, die mit Hilfe der Gleitringdichtung abzudichten ist.

Um den rotierenden Gleitring 1 mit der Hülse 6 zu verbinden, weist die Hülse 6 über den Umfang verteilt mehrere Bereiche 30, 31 und 32 auf, welche formschlüssig in entsprechende Gegenbereiche 40 des Gleitrings 1 eingelagert sind.

Aus Fig. 3 geht hervor, daß die Bereiche 30, 31 und 32 jeweils Teil eines sphärischen Dreiecks sind, wobei die Gegenbereiche des Gleitrings 1 Aussparungen aufweisen, welche in die entsprechenden Zonen des sphärischen Dreicks 35 eingelagert sind.

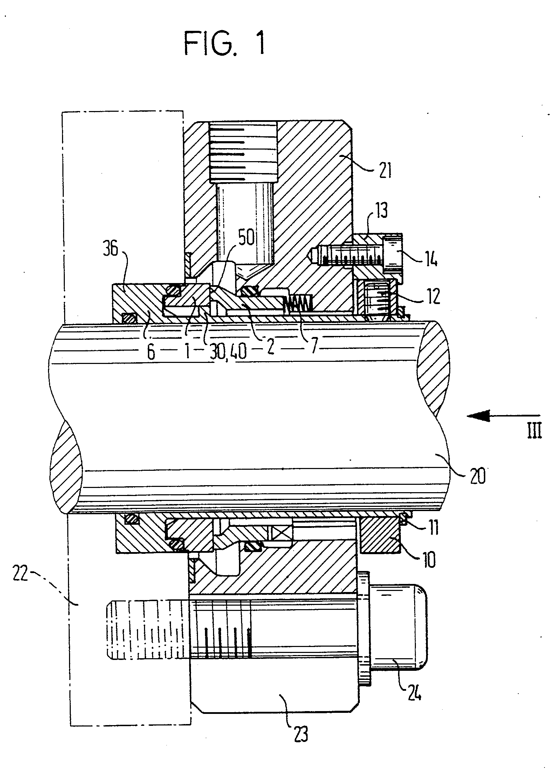

Fig. 1 läßt erkennen, daß das sphärische Dreieck im axialen Abstand von dem Abschlußflansch 36 der Hülse 6 im Bereich der stirnseitigen Dichtflächen 50 des Gleitrings 1 und des Dichtrings 2 liegt.

Durch die Einlagerungen der Aussparungen 40 des Gleitrings 1 in die entsprechenden Bereiche 30, 31, 32 des sphärischen Dreiecks 35 der Hülse 6 ergibt sich eine einwandfreie, kosten- und raumsparende Verbindung zwischen diesen beiden Maschinenteilen bei voller Beibehaltung der Dichtigkeit der erfindungsgemäßen Gleitringdichtung.

## Patentansprüche

1. Gleitringdichtung für eine rotierende Welle (20), mit einem Gehäuse (21) mit darin angeordnetem, stationärem Dichtring (2), dessen stirnseitige Dichtfläche die Dichtfläche eines rotierenden Gleitrings (1) berührt, wobei der Gleitring (1) auf einer mit der rotierenden Welle (20) verbundenen Hülse (6) befestigt ist, welche über den Umfang verteilt mehrere Bereiche (30, 31, 32) aufweist, die formschlüssig in Gegenbereiche (40) des Gleitrings (1) eingelagert sind,
dadurch gekennzeichnet,
daß die Bereiche (30, 31, 32) Teil eines sphärischen Dreiecks (35) sind, wobei die Gegenbereiche (40) Aussparungen aufweisen, welche in die entsprechenden Zonen des sphärischen Dreiecks (35) eingelagert sind und daß das sphärische Dreieck (35) im axialen Abstand von einem Abschlußflansch (36) der Hülse (6) im Bereich der Dichtflächen (50) des Gleitrings (1) und des federnd beaufschlagten Dichtrings (2) liegt.

2. Gleitringdichtung nach Anspruch 1, wobei die Hülse auf der dem Abschlußflansch (36) abgekehrten Seite mit einem Haltering (10) verbunden ist,
dadurch gekennzeichnet,
daß sich die Hülse (6) durch das Gesamtgehäuse (21) erstreckt.

3. Gleitringdichtung nach Anspruch 1 und 2, wobei der Haltering (10) axial durch einen in der Hülse (6) eingelagerten Federring (11) gesichert ist,
dadurch gekennzeichnet,
daß der Haltering (10) zusätzlich durch mehrere, an dem Gehäuse (21) befestigte Halteteile (13) gehaltert ist.

## Claims

1. A slide ring seal for a rotating shaft (20), with a housing (21) with a stationary sealing ring (2) located therein, the end sealing surface of which contacts the sealing surface of a rotating slide ring (1), the slide ring (1) being fastened to a sleeve (6) connected to the rotating shaft (20), which sleeve has a plurality of regions (30, 31, 32), distributed across the periphery, which are incorporated positively in counter-regions (40) of the slide ring (1),
characterised in that
the regions (30, 31, 32) form part of a spherical triangle (35), the counter-regions (40) having recesses which are incorporated into the corresponding zones of the spherical triangle (35), and that the spherical triangle (35) is at an axial distance from a sealing flange (36) of the sleeve (6) in the region of the sealing surfaces (50) of the slide ring (1) and the resiliently loaded sealing ring (2).

2. A slide ring seal according to Claim 1, wherein the sleeve is connected on the side remote from the sealing flange (36) to a holding ring (10),
characterised in that the sleeve (6) extends through the entire housing (21).

3. A slide ring seal according to Claims 1 and 2, wherein the holding ring (10) is axially secured by a spring ring (11) incorporated in the sleeve (6),
characterised in that the holding ring (10) is additionally held by a plurality of holding parts (13) fastened to the housing (21).

## Revendications

1. Garniture étanche à anneau de glissement pour un arbre rotatif (20), comprenant un boîtier (21) dans lequel est prévu un anneau d'étanchéité fixe (2) dont la surface d'étanchéité frontale est en contact de la surface d'étanchéité d'un anneau de glissement rotatif (1), dans lequel l'anneau de glissement (1) est fixé sur un manchon (6) relié à l'arbre rotatif (20), lequel présente plusieurs régions (30, 31, 32) réparties sur la périphérie, qui sont logées par complémentarité de forme dans des régions opposées (40) de l'anneau de glissement (1), caractérisée en ce que les régions (30, 31, 32) sont des parties d'un triangle sphérique (35), les régions opposées (40) présentant des évidements qui sont reçus dans les zones correspondantes du triangle sphérique (35), et en ce que le triangle sphérique (35) est écarté axialement d'une bride d'extrémité (36) du manchon (6) dans la région des surfaces d'étanchéité (50) de l'anneau de glissement (1) et de l'anneau d'étanchéité (2) rappelé élastiquement.

2. Garniture étanche à anneau de glissement selon la revendication 1, dans lequel le manchon est relié avec un anneau d'arrêt (10) du côté éloigné de la bride d'extrémité (36), caractérisée en ce que le manchon (6) s'étend au travers de la totalité du boîtier (21).

3. Garniture étanche à anneau de glissement selon la revendication 1 ou 2, dans lequel l'anneau d'arrêt (10) est bloqué axialement par un anneau élastique (11) reçu dans le manchon (6), caractérisée en ce que l'anneau d'arrêt (10) est en outre maintenu par l'intermédiaire de plusieurs éléments d'arrêt (13) fixés au boîtier (21).
